# EUROPEAN PATENT SPECIFICATION

(11) **EP 4 243 162 B1**
(45) Date of publication and mention of the grant of the patent: **10.04.2024**
(21) Application number: 22194295.6
(22) Date of filing: 07.09.2022
(51) Int. Cl.: H01M 50/103, H01M 50/202, H01M 50/209, H01M 50/244, H01M 50/262, H01M 50/289, B60L 50/64

(54) **BATTERY DEVICE AND ASSEMBLING METHOD OF BATTERY DEVICE**
BATTERIEVORRICHTUNG UND ZUSAMMENBAUVERFAHREN FÜR EINE BATTERIEVORRICHTUNG
DISPOSITIF DE BATTERIE ET PROCÉDÉ D'ASSEMBLAGE D'UN DISPOSITIF DE BATTERIE

(30) Priority: 11.03.2022 CN 202210235154
(43) Date of publication of application: 13.09.2023
(73) Proprietor: CALB Co., Ltd., Changzhou City, Jiangsu Province (CN)
(72) Inventor: ZHAO, Dong, Changzhou City, Jiangsu Province (CN)
(74) Representative: Becker, Eberhard

(56) References cited:
- CN-U- 215 680 823
- CN-U- 215 955 398
- DE-A1-102018 214 889

## Description

### BACKGROUND

### Technical Field

The disclosure relates to the technical field of batteries, and in particular, relates to a battery device and an assembling method of the battery device.

### Description of Related Art

In the box of the battery pack, a chamber is formed by beams. Exemplary battery packs are described in DE 10 2018 214889 A1, CN 215 955 398 U and CN 215 680 823 U.

In the assembly process of the battery device, each battery group is generally put into the chamber of the box by a clamping tool. Further, before the battery groups are placed into the chamber, adhesives are applied on the battery groups and/or the beams, so that the battery groups placed into the chamber are adhered and fixed to the beams. However, when the battery groups are placed into the chamber, the adhesives coated in advance may be scratched off and adhered to other positions. As such, favorable adhering strength may not be provided after coating and curing is performed, and/or the battery device may not be assembled in place, the assembly yield of the battery device may thus be affected, which is not conducive to industrial production.

### SUMMARY

The disclosure provides a battery device according to claim 1 and an assembling method of the battery device according to claim 13. The invention is defined by the appended claims.

In the first aspect, the disclosure provides a battery device, and the battery device includes a box frame, battery groups located in the box frame, and first beams. An adhesive layer is provided between each of the first beams and a first side surface of an adjacent one of the battery groups, and the adhesive layer is formed as each of the first beams and the first side surface of the adjacent one of the battery groups are mutually pressed in a first direction. A side of one of the first beams located at an end portion facing away from the battery groups is adjacent to the box frame and is separated from the box frame by a first set interval, and the first set interval is configured to allow the first beam at the end portion to move towards the first side surface of the battery group for adhering.

In the second aspect, the disclosure provides an assembling method of a battery device. The assembling method includes the following steps. A structural adhesive is arranged on a first side surface of each battery group and/or on a first beam adjacent to the first side surface. The battery groups and the first beams are installed in a box frame in sequence in a first direction, and a side of one of the first beams located at an end portion facing away from the battery group is allowed to face the box frame and to be separated from the box frame by a first set interval. The installation process of each first beam includes the following step. The first beam is arranged to be separated from the adjacent battery group by a second set interval in the first direction, and the first beam is then pressed towards the adjacent battery group until the structural adhesive between the first side surface of the battery group and the first beam is squeezed apart, such that the battery group is firmly adhered to the first beam by the structural adhesive.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view of a battery device in a process of installing a first battery group according to an embodiment of the disclosure.
FIG. 2 is a schematic view of the battery device after the first battery group is installed in place according to an embodiment of the disclosure.
FIG. 3 is a schematic view of the battery device in a process of installing a first beam according to an embodiment of the disclosure.
FIG. 4 is a schematic view of the battery device when the first beam is installed in place according to an embodiment of the disclosure.
FIG. 5 is a schematic view of the battery device after a group of first beams and battery groups are assembled according to an embodiment of the disclosure.
FIG. 6 is a schematic view of the battery device after a group of first beam and battery groups are assembled according to another embodiment of the disclosure.
FIG. 7 is a flow chart of an assembling method of a battery device according to an embodiment of the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

In the related art, a box of a battery pack is surrounded by beams to form a chamber, and battery groups are directly inserted into the chamber surrounded by the beams. In this arrangement, if the battery groups and the beams are not adhered to each other through adhesive, the battery groups may be easily displaced or may be easily separated from the chamber due to vibration and other reasons during the use of the battery pack, resulting in danger. Further, the vibration/impact force generated by the battery group may all act on a liquid-cooling plate located at the bottom. A slightly stronger impact force may easily cause the connection between the liquid-cooling plate and the beams to loosen or to be disconnected. The liquid-cooling plate may be damaged, and the liquid cooling plate may even leak. If an adhesive is applied onto the battery groups and/or the beams before the battery groups and/or the beams are placed into the chamber, the adhesive may be scratched off and adhered to other positions during the process of placing the battery group into the chamber. The amount of adhesive being actually applied is thereby reduced, and the adhesive is not being evenly applied, such that the batteries may not be stably fixed.

In view of the above, the disclosure provides a battery device and an assembling method of the battery device, which can enhance the strength of adhering and fixing between beams and battery groups, such that the assembly yield of the battery groups is improved, and the overall yield of the battery device is increased.

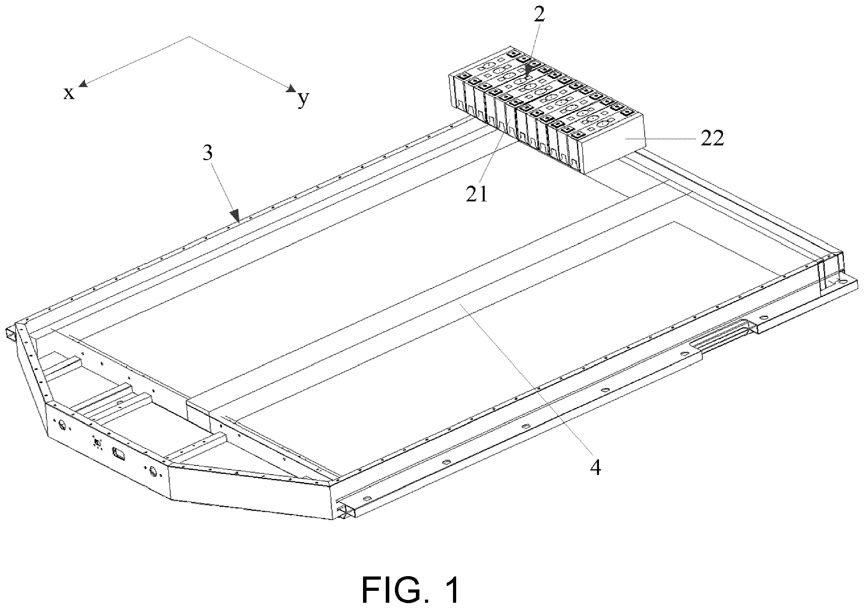

In the first aspect, the disclosure provides a battery device. As shown in FIG. 1, FIG. 2, FIG. 3, FIG. 4, FIG. 5, and FIG. 6, the battery device includes a box frame 3, battery groups 2 and first beams 1 that are located in the box frame 3. An Adhesive layer is provided between each of the first beams 1 and a first side surface 21 of an adjacent one of the battery groups 2, the adhesive layer is formed as each of the first beams 1 and the first side surface 21 of the adjacent one of the battery groups 2 are mutually pressed in a first direction x. A side of one of the first beams 1 located at an end portion facing away from the battery group 2 is adjacent to the box frame 3 and is separated from the box frame 3 by a first set interval s, and the first set interval s is configured to allow the first beam 1 at the end portion to move towards the first side surface 21 of the battery group 2 for adhering. To be specific, the first beam 1 at the end portion is the first beam 1 provided with a battery group 2 on one side and not provided with a battery group 2 on the other side. In other words, one side of the first beam 1 at the end portion is configured for arranging a battery group 2, and the other side of the first beam 1 at the end portion is not configured for arranging a battery group 2, so this first beam 1 at the end portion is only used to limit the position of a battery group 2 on one side.

In the battery device provided by this embodiment, the adhesive layers are provided between the battery groups 2 and the first beams 1, and the battery groups 2 and the first beams 1 are adhered and fixed to each other through the adhesive layers. In this way, the pressure generated by the battery groups 2 on a bottom plate 6 of a box may be reduced, and overall reliability and safety of the battery device may be improved. To be specific, the battery groups 2 and the first beams 1 are arranged in sequence in the first direction x. The last first beam 1 is located at an end portion in an arrangement direction of the battery groups 2 and the first beams 1, and the last first beam 1 is adjacent to the box frame 3, and is separated from the close-by box frame 3 by the first set interval s. This first set interval s provides a space for the installation operation of the last first beam 1. Therefore, when the battery device is assembled, the battery groups 2 and the first beams 1 may be installed in sequence, and the first beam 1 at the end portion is installed at last. In this way, the problem of the adhesive layers being scratched caused by insertion of the battery groups 2 after formation of a chamber by the beam structure is prevented from occurring. To be specific, each of the first beams 1 may be moved towards and pressed against the adjacent battery group 2 in the first direction x during installation until a structural adhesive between the first side surface 21 of the battery group 2 and the first beam 1 is squeezed apart, and installation is performed in place in this way. Therefore, in the installation process of the first beam 1, the adhesive layer is prevented from being scratched off, and the effect of the pressed adhesive overflow may also be achieved. The adhesive layer formed by pressing is uniform and dense and provides favorable adhesive strength after final coating and curing is performed, so that the adhesive strength between the first side surface 21 of the battery group 2 and the first beam 1 is improved. In view of the above, in the battery device provided by the disclosure, the adhesive effect between the battery groups 2 and the beams is improved and the assembly yield of the battery device is increased, and the battery device provided by the disclosure is thereby beneficial to industrial production.

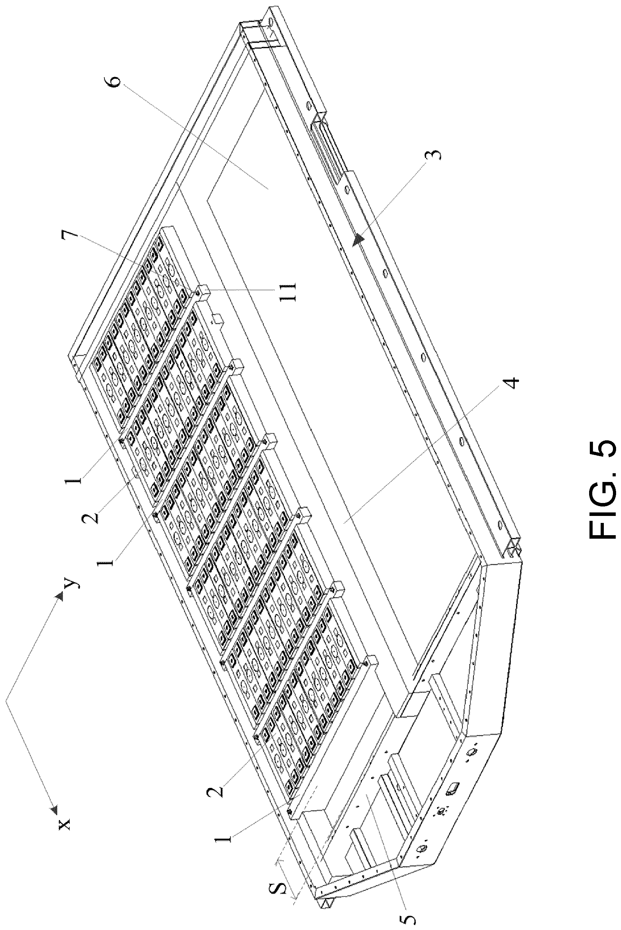

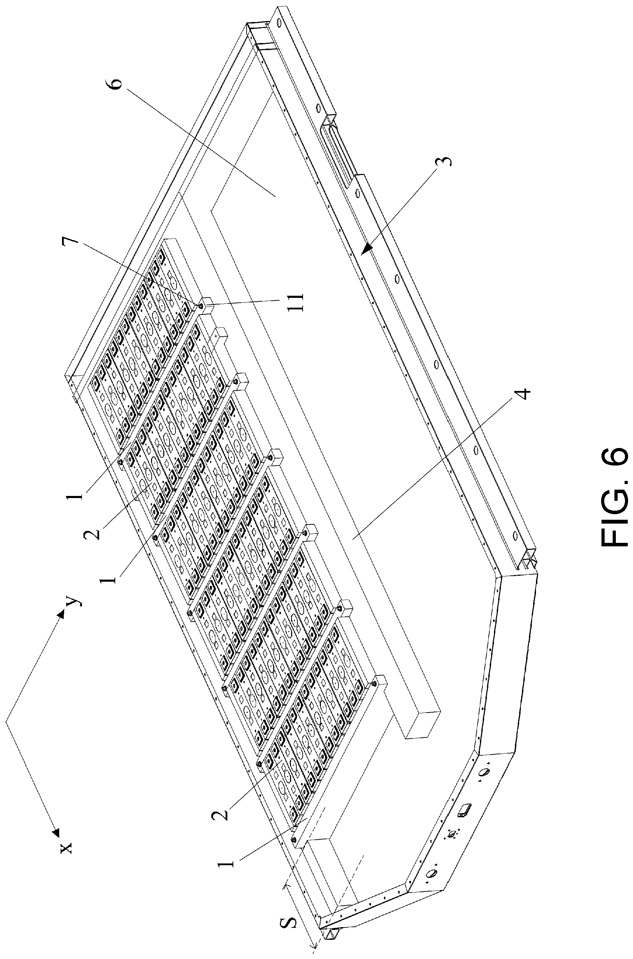

In some embodiments, as shown in FIG. 5 and FIG. 6, in the battery device, the battery groups 2 and the first beams 1 are arranged in sequence in an alternating manner, that is, arranged in a manner of the battery group 2 - first beam 1 - battery group 2 - first beam 1, in the first direction x. Therefore, when the battery device is assembled, the battery groups 2 and the first beams 1 are installed in an alternating manner in sequence, and the first beam 1 at the end portion is installed last.

Certainly, in the first direction x, it may only provide one battery group 2 and one first beam 1, and in this case, the one first beam 1 is the last first beam 1, which is installed after the battery group 2.

In some embodiments, as shown in FIG. 5 and FIG. 6, the first set interval s is greater than 5 mm. Preferably, the first set interval s is greater than 8 mm, for example, the first set interval s may be 8 mm, 10 mm, 12 mm, 14 mm, 16 mm, 18 mm, and 20 mm. Preferably, the first set interval s ranges between 8 mm and 15 mm. Through the arrangement of the first set interval s, a space that is sufficient for installation of the last first beam 1 is kept. As such, the adhesive layer is prevented from being scratched off when this first beam 1 is installed, so the assembly yield is ensured, a moving stroke of this first beam 1 in the first direction x is shorter, and installation may thus be conveniently performed. Besides, the first set interval s does not occupy much space of the battery device, so that the energy density of the battery device is ensured.

Specifically, the entire box frame 3 may be an integral structure or may be a structure that is spliced together by beams, frames, plates, and the like. In the disclosure, the box frame 3 adjacent to the side of the first beam 1 at the end portion facing away from the battery groups 2 may be a beam or a frame or other structures with substantially the same extending direction as the first beam 1. The first set interval s refers to a closest distance between a side surface of the first beam 1 facing away from the battery group 2 and the beam or the frame.

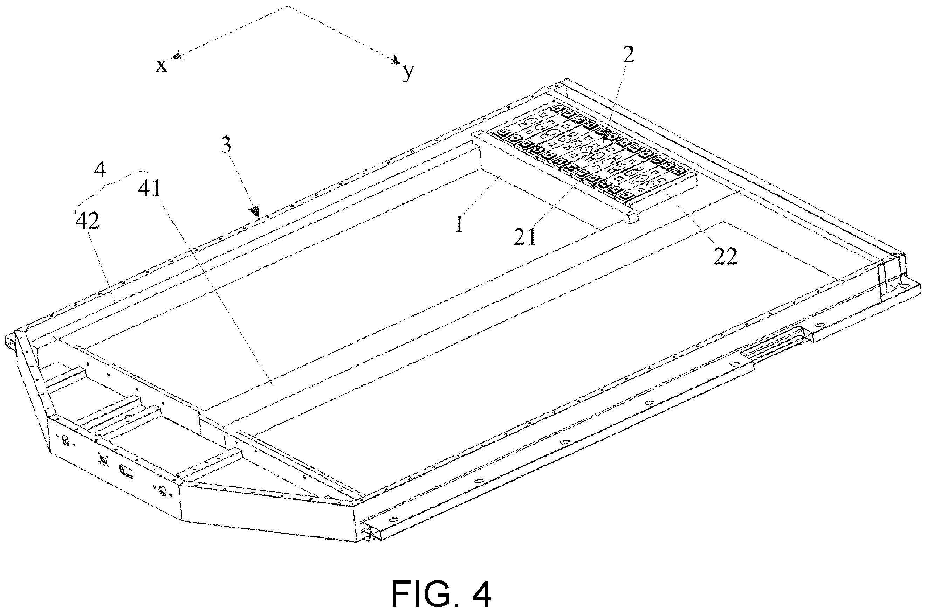

In some embodiments, as shown in FIG. 4, FIG. 5, and FIG. 6, the box frame 3 includes a second beam 4, and the second beam 4 intersects the extending direction of the first beams 1. To be specific, the first beams 1 are substantially perpendicular to the first direction x, the second beam 4 is substantially parallel to the first direction x, and the first beams 1 and the second beam 4 are detachably connected.

To be specific, the second beam 4 may include either a middle beam 41 that divides the entire box frame 3 into a plurality of chambers, and may include a side beam 42 that is adjacent to the frame of the box frame 3.

The detachable connection between the first beams 1 and the second beam 4 enables the first beams 1 and the battery groups 2 to be installed in an alternating manner in sequence in turn, and enables the first beams 1 to be conveniently assembled and disassembled, and the reliability of the assembly of the first beams 1 is also ensured.

Exemplarily, both ends of each of the first beams 1 respectively couple two second beams 4, and are respectively secured to the two second beams 4 by fasteners. To be specific, a height of each of the first beams 1 is greater than a height of each of the second beams 4, and both ends of each of the first beams 1 are respectively provided with coupling portions 11 located above the second beams 4. Fasteners such as bolts 7 may be used to penetrate through the coupling portions 11 and the second beams 4 in sequence, that is, end portions of the first beams 1 may be connected to the second beams 4. In this way, the fixing yield of the first beams 1 may be ensured.

Exemplarily, each first beam 1 is provided with a first positioning portion, and each second beam 4 is provided with a second positioning portion. The first positioning portion and the second positioning portion are matched, so that the first beam 1 and the second beam 4 are positioned and assembled.

To be specific, by arranging mutually matched positioning portions on the first beams 1 and the second beams 4, the positioning of the assembly of the first beams 1 may be achieved, and the accuracy of the assembly positions of the first beams 1 may be improved. An excessively large or excessively small pressure applied on the battery groups 2, due to the improper assembly of the first beams 1 and thereby affecting the assembly yield of the battery device, is thereby prevented from being generated.

For instance, the first positioning portions and the second positioning portions may be positioning holes, and the first positioning portions and the second positioning portions are aligned and matched and may be connected by fasteners such as bolts.

Alternatively, the first positioning portions and the second positioning portions may also be the combination of bolts and positioning holes. For instance, the first positioning portions are positioning holes, and the second positioning portions are bolts fixed on the second beams 4. By placing the positioning holes on the bolts, the alignment and positioning of the first beams 1 and the second beams 4 may be achieved, and the two may be fixed by locking of the nuts and bolts. Certainly, the first positioning portions and the second positioning portions in this embodiment are not limited to the abovementioned embodiment and may be arranged according to actual conditions.

In some embodiments, as shown in FIG. 5 and FIG. 6, the box frame 3 includes a bottom plate 6, and the first beams 1 and the bottom plate 6 are locked and fixed by fasteners such as bolts.

The first beams 1 and the bottom plate 6 are detachably connected by fasteners such as bolts, and therefore, the fixing yield of the first beams 1 is further improved, the first beams 1 may be conveniently assembled and disassembled, and the reliability of the assembly of the first beams 1 is ensured. Further, by arranging installation holes on the first beams 1 and the second bottom plate 6, the assembly of the first beams 1 may be positioned, and the accuracy of the assembly positions of the first beams 1 may be improved. An excessively large or excessively small pressure applied on the battery groups 2, due to the improper assembly of the first beams 1 and thereby affecting the assembly yield of the battery device, is thereby prevented from being generated.

In some embodiments, as shown in FIG. 1, FIG. 2, FIG. 3, and FIG. 4, adhesive layers are respectively provided between two opposite second side surfaces 22 of the battery group 2 and the adjacent second beams 4.

To be specific, the battery group 2 is formed of at least one column of batteries, the battery group 2 is substantially rectangular, and has six surfaces, specifically a top surface, a bottom surface, and four side surfaces. The four side surfaces include the two opposite first side surfaces 21 and the two opposite second side surfaces 22. In this embodiment, adhesive layers are provided on both the orientations of the two first side surfaces 21 and the two second side surfaces 22 of the battery group 2. That is, the four side surfaces of the battery group 2 and the corresponding beams are all fixed by adhesive layers. In this way, the pressure of the battery group 2 on the bottom plate 6 may be further reduced, and the overall reliability and safety of the battery device may be further improved.

In some embodiments, as shown in FIG. 1, FIG. 2, FIG. 3, and FIG. 4, the battery group 2 includes at least one column of batteries, and an arrangement direction of each column of batteries is perpendicular to larger surfaces of the batteries. The larger surface of each battery is a surface with a largest area of the battery. The first side surface 21 of the battery group 2 is a side surface formed by the side surfaces of each column of batteries, which is parallel to the arrangement direction of each column of batteries. Correspondingly, the first beam 1 adhered to the first larger surface 21 is also parallel to the arrangement direction of each column of batteries. The second side surface 22 of the battery group 2 is formed by the larger surface of the end battery in each column of batteries.

To be specific, the two first side surfaces 21 of the battery group 2 are substantially parallel to the arrangement direction of each column of batteries and include side surfaces of a plurality of batteries. The two second side surfaces 22 of the battery group 2 are substantially perpendicular to the arrangement direction of each column of batteries and are formed by the larger surfaces of the end batteries in each column of batteries. When the battery group 2 functions, the larger surfaces of the batteries may be easily bulged and deformed. That is, the deformation in the arrangement direction of each column of batteries is greater, which causes the battery group 2 to be easily displaced in the direction perpendicular to the second side surfaces 22. The first side surface 21 of the battery group 2 is formed by the side surfaces of a plurality of batteries. When the battery group 2 functions, the state of the first side surface 21 is relatively stable and is not prone to deformation and displacement. Therefore, relatively speaking, the first beam 1 opposite to the first side surface 21 of the battery group 2 is more suitable for installation in the form of horizontal movement and pressing.

In this embodiment, the first side surfaces 21 of the battery groups 2 face the first beams 1 and are adhered and fixed to the first beams 1, and the battery groups 2 and the first beams 1 are installed in an alternating manner in the first direction x. During installation, each first beam 1 is gradually moved towards the first side surface 21 of the battery group 2 in the first direction x and is pressed. Therefore, the adhesive between the beam and the first side surface 21 of the battery group 2 is pressed and overflows, so that the adhesive effect between the first side surface 21 of the battery group 2 and the first beam 1 may be improved.

Besides, since it is difficult to control the pressing force of the second side surface 22, the second beam 4 opposite to the second side surface 22 does not adopt the method of pressing and installing in sequence. To be specific, the second beam 4 may be pre-installed or integrally formed with the box frame 3, and the position of the second beam 4 is precisely fixed. In this way, the problems of excessively large or excessively small pressing force and inaccurate assembly position when the moving and pressing installation method is adopted may be avoided, the safety performance and the overall assembly yield of the battery device is thereby ensured.

In some embodiments, as shown in FIG. 1, FIG. 2, FIG. 3, FIG. 4, and FIG. 5, the battery device provided by this embodiment has a battery group region and a power distribution region. The battery group region is the region for assembling the battery groups 2, and the power distribution region is the region for arrangement electrical devices. To be specific, the box frame 3 includes a divider beam 5 that separates the battery group region from the power distribution region. The divider beam 5 is substantially perpendicular to the first direction x and is substantially arranged the same as the extending direction of the first beams 1. The first beam 1 located at a rear end of the arrangement direction of the battery groups 2 and the first beams 1 is adjacent to the divider beam 5 and is separated from the divider beam 5 by the first set interval s.

In other words, the side of the last-installed first beam 1 facing away from the battery group 2 is adjacent to the divider beam 5 and is separated from the divider beam 5 by the first set interval s. This first set interval s provides a space for the installation operation of the last-installed first beam 1. Therefore, when the last first beam 1 is installed, the last first beam 1 may first be disposed to be separated from the adjacent battery group 2 by a second set interval d in the first direction x. The second set interval d is less than or equal to the first set interval s. Next, the last first beam 1 is moved towards its adjacent battery group 2 and is pressed until the structural adhesive between the first side surface 21 of the battery group 2 and the first beam 1 is squeezed apart. Installation is performed in place in this way, the adhesive layer is prevented from being scratched off, the effect of pressed adhesive overflow is achieved, and the adhesive strength between the first side surface 21 of the battery group 2 and the first beam 1 is ensured.

In this embodiment, the battery groups 2 and the first beams 1 are installed in an alternating manner from the battery group region to the power distribution region. First install the battery group 2, this battery group 2 is adjacent to the frame of the box frame and is adhered to the frame of the box frame, and the first beam 1 is installed to press the battery group 2, so that the first beam 1 and the battery group 2 are adhered and fixed to each other. After that, in sequence, the battery groups 2 and the first beams 1 are installed in an alternating manner until the last first beam 1 is installed. The last first beam 1 is adjacent to the divider beam 5 and is separated from the divider beam 5 by the first set interval s. In this embodiment, through the arrangement of the first set interval s, a distance between the battery group 2 and an electrical device may be increased, and the probability of a short circuit between the two may be reduced.

In some embodiments, as shown in FIG. 1, FIG. 2, FIG. 3, FIG. 4, and FIG. 6, the divider beam is not provided between the battery group region and the power distribution region. The battery group region is separated from the power distribution region by the first beam 1 located at the end portion. The side of the first beam 1 at the end portion facing away from the battery group 2 is adjacent to the frame of the box frame 3 and is separated from the frame by the first set interval s.

In this embodiment, the side of the last-installed first beam 1 facing away from the battery group 2 directly faces the frame of the box frame and is separated from the frame by the first set interval s. This first set interval s provides a space for the installation operation of the last-installed first beam 1, the adhesive layer is further prevented from being scratched during the installation of the first beam 1, and the adhesive is pressed and overflows through the installation of the first beam 1. As such, the adhesive strength between the first side surface 21 of the battery group 2 and the first beam 1 is ensured. Besides, the region where the first set interval s is located is configured as the power distribution region. The power distribution region may be configured for arrangement of electrical devices after the first beams 1 are installed, and in this way, the space is reused and is effectively saved, and the energy density of the battery device is thereby improved. Further, the divider beam is omitted in this embodiment, so that a weight of the box frame may be reduced, the space may be saved, and the energy density of the battery device may be further improved.

To be specific, in actual operation, the solution of the disclosure is not limited to the assembling manner provided by the abovementioned embodiments. As long as it is ensured that the first set interval s is kept between the last-installed first beam 1 and its adjacent box frame 3, so as to ensure that the first beams 1 may move horizontally to implement the assembly operation. For instance, in some other embodiments, the battery groups 2 and the first beams 1 may be arranged in an alternating manner in a second direction y. The second direction y is substantially perpendicular to the first direction x. Herein, the first beams 1 extend in the first direction x, and the side of the last first beam 1 facing away from the battery group 2 is adjacent to the box frame and is separated from the box frame by the first set interval s.

Further, in the disclosure, the battery groups 2 and the first beams 1 that are arranged in an alternating manner in sequence in the first direction x are referred to as a group of battery groups 2 and first beams 1. As such, in the embodiments of the disclosure, in the box frame of the battery device, it may only provide one group of battery groups 2 and first beams 1 in an alternating manner in sequence in the first direction x, or it may also provide a plurality of groups of battery groups and first beams may be arranged in an alternating manner in sequence in the first direction x. Specific arrangement may be implemented according to actual conditions, which is not particularly limited by the disclosure.

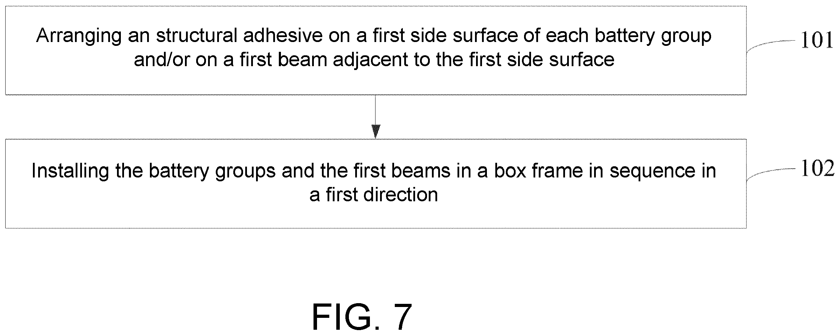

In the second aspect, based on the same inventive concept as the battery device provided by the embodiments of the disclosure, the disclosure further provides an assembling method of a battery device. As shown in FIG. 7, the assembling method includes the following steps.

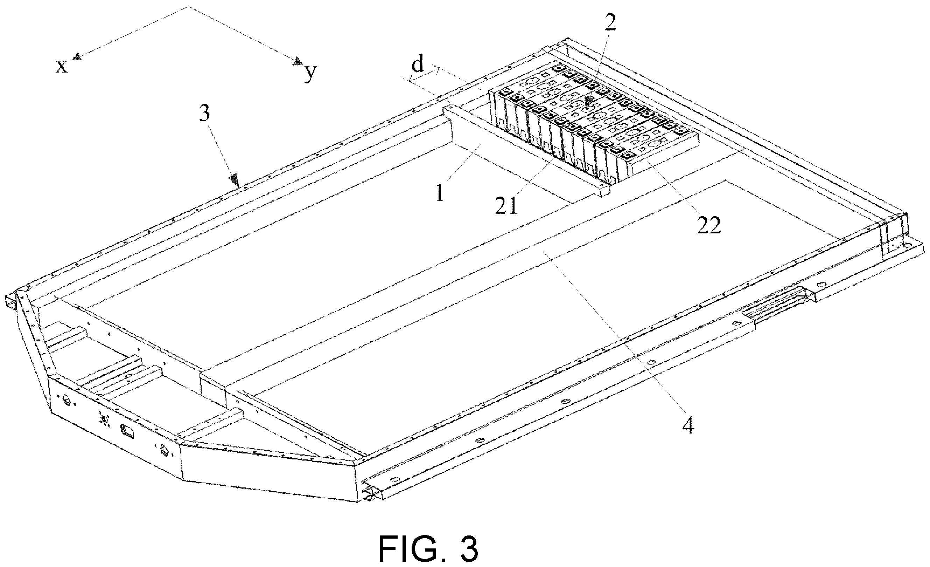

In the step 101, as shown in FIG. 1 and FIG. 3, a structural adhesive is arranged on the first side surface 21 of the battery group 2 and/or on the first beam 1 adjacent to the first side surface 21.

In the step 102, as shown in FIG. 1, FIG. 2, FIG. 3, FIG. 4, and FIG. 5, the battery groups 2 and the first beams 1 are arranged in the box frame 3 in sequence in the first direction x, and the side of the first beam 1 located at the end portion facing away from the battery groups 2 is allowed to face the box frame 3 and to be separated from the box frame 3 by the first set interval s.

To be specific, the installation process of each of the first beams 1 is provided as follows. With reference to FIG. 3 and FIG. 4, the first beam 1 is arranged to be separated from the adjacent battery group 2 by the second set interval d in the first direction x. The first beam 1 is then pressed towards the adjacent battery group 2 until the structural adhesive between the first side surface 21 of the battery group 2 and the first beam 1 is squeezed apart, such that the battery group 2 is firmly adhered to the first beam 1 by the structural adhesive.

In the assembling method of the battery device provided by this embodiment, the battery groups 2 and the first beams 1 are installed in sequence. Each first beam 1 is arranged to be separated from the first side surface 21 of the battery group 2 by the second set interval d first during the installation process and then is moved towards the first side surface 21 of the battery group 2 until it is assembled in place. Compared with the method of directly inserting the battery groups 2 into the box chamber, in this installation method, the adhesive layer may be prevented from being scratched off, and the pressed adhesive overflow effect may also be achieved. As such, after the final coating and curing is performed, the adhesive layers may exhibit favorable adhesive strength, so that the adhesive strength between the first side surfaces 21 of the battery groups 2 and the first beams 1 is improved, and the assembly yield of the battery device is increased, which is beneficial to industrial production. Besides, the last-installed first beam 1 is located at the rear end in the arrangement direction of the battery groups 2 and the first beams 1, and the last-installed first beam 1is adjacent to the box frame 3, and is separated from the close-by box frame 3 by the first set interval s. This first set interval s reserves a space for the installation operation of the last first beam 1. Therefore, it is ensured that the last first beam 1 may be moved horizontally so as to be assembled in place, the adhesive effect between the battery groups 2 and the first beams 1 is improved, and the assembly yield of the battery device is increased.

It should be noted that, the coating process of the structural adhesives and the installation process of the battery groups and the first beams may be performed simultaneously, and specifically, an automated assembly operation may be performed through a processing assembly line. For instance, an adhesive may be applied to each battery group in sequence, and the battery groups are transferred to an assembly station, and the battery groups arriving at the assembly station may be installed into the box frame by a robotic arm. Similarly, the installation operation of the first beams may also be controlled by the robotic arm.

In some embodiments, in the step 102, the battery groups 2 and the first beams 1 are installed in the box frame 3 in sequence in the first direction x. To be specific, as shown in FIG. 5 and FIG. 6, the battery groups 2 and the first beams 1 are arranged in the box frame 3 in sequence in an alternating manner, that is, arranged in a manner of the battery group 2 - first beam 1 - battery group 2 - first beam 1, in the first direction x. In this way, the adhesive layers between the battery groups 2 and the first beams 1 are prevented from being scratched off, and the adhesive between each first beam 1 and each battery group 2 is pressed and overflows, so that the assembly yield of the entire battery device is increased.

In some embodiments, the battery groups 2 include at least one column of batteries, an arrangement direction of each of the at least one column of batteries is perpendicular to the larger surfaces of the batteries. In the assembling method of the battery device provided by the disclosure, the installation process of each battery group 2 includes the following step. The battery group 2 is over-pressed and loaded in the arrangement direction of each column of batteries into the box frame 3. To be specific, the first side surfaces 21 of the battery groups 2 are parallel to the arrangement direction of each column of batteries, each column of batteries in the battery groups 2 are arranged in the second direction y, the battery groups 2 and the first beams 1 are installed in an alternating manner in the first direction x, and the first direction x is substantially perpendicular to the second direction y.

When the battery groups 2 function, the larger surfaces of the batteries may be easily bulged and deformed. That is, the deformation in the arrangement direction of each column of batteries is much more significant, which causes the battery groups 2 to be easily displaced in the direction perpendicular to the second side surfaces 22, that is, the second direction y. The first side surface 21 of each battery group 2 is formed by the side surfaces of a plurality of batteries. When the battery group 2 functions, the state of the first side surface 21 is stable. That is, the battery group 2 is not easily deformed and displaced in the direction perpendicular to the first side surface 21, that is, the first direction x. Therefore, relatively speaking, the first beams 1 opposite to the first side surfaces 21 of the battery groups 2 are more suitable for installation in the form of horizontal movement and pressing.

In some embodiments, as shown in FIG. 5 and FIG. 6, the box frame 3 includes the second beam 4, and the second beam 4 intersects the extending direction of the first beams 1. The assembling method of the battery device provided by this embodiment further includes the following step.

In the step, the first beams 1 and the second beam 4 are locked and fixed by fasteners. For instance, the fasteners may be the bolts 7.

Exemplarily, both ends of each of the first beams 1 respectively couple two second beams 4 and are respectively connected to the two second beams 4 by the bolts 7. To be specific, the height of each of the first beams 1 is greater than the height of each of the second beams 4, and both ends of each of the first beams 1 are provided with the coupling portions 11 located above the second beams 4. Connectors such as the bolts 7 may be used to penetrate through the coupling portions 11 and the second beams 4 in sequence, that is, the end portions of the first beams 1 may be connected to the second beams 4.

To be specific, the detachable connection between the first beams 1 and the second beam 4 enables the first beams 1 and the battery groups 2 to be installed in sequence in turn and to be conveniently assembled and disassembled, and the reliability of the assembly of the first beams 1 is also ensured. Further, by arranging the installation holes on the first beams 1 and the second beam 4, the assembly of the first beams 1 may be positioned, and the accuracy of the assembly positions of the first beams 1 may be improved. An excessively small pressure applied on the battery groups 2, due to the improper assembly of the first beams 1 and thereby affecting the assembly yield of the battery device, is thereby prevented from being generated.

Exemplarily, the installation process of the battery groups 2 and the first beams 1 and the locking and fixing process of the first beams 1 may be performed alternately. The specific operation may be provided as follows. A pair of battery group 2 and the first beam 1 are installed in the box frame 3 in sequence, and the first beam 1 is secured to the second beam 4. Afterwards, another pair of battery group 2 and the first beam 1 are installed in the box frame 3 in sequence, the first beam 1 is secured to the second beam 4, and so on, until the locking and fixing of the last first beam 1 at the end portion is completed. In other words, after each pair of battery group 2 and the first beam 1 are assembled in place, the first beam 1 is locked and fixed immediately, and then the next pair of battery group 2 and the first beam 1 are assembled. Through this assembling method, it is beneficial to improve the installation and positioning effect of each battery group 2 and the first beam 1, and the assembly yield is also increased. Further, during the installation of each pair of battery group 2 and the first beam 1, the pressing force of the first beam 1 only acts on the adjacent battery group 2 and the previous one of the first beams 1. As such, it may be ensured that the force applied on each pair of battery group 2 and the first beam 1 is consistent, and the effect of the pressed adhesive overflow between the battery group 2 and the first beam 1 is raised, and that the yield of adhesive fixing between each battery group 2 and the first beam 1 is increased.

In some embodiments, in the step 102, the assembly process of the first beams 1 is specifically provided as follows.

As shown in FIG. 5 and FIG. 6, each first beam 1 is pressed towards the adjacent battery group 2 until the structural adhesives on both sides of the battery group 2 are squeezed apart, such that the battery group 2 is firmly adhered to the structures at two sides of the battery group 2 by the structural adhesives. In this way, through the assembly operation of each first beam 1, the adhesive between the first beam 1 and its adjacent battery group 2 is pressed and overflows, so the first beam 1 is adhered and fixed to its adjacent battery group 2. Further, the adhesive between the adjacent battery group 2 and the previous first beam 1 or the front box frame 3 may be pressed and overflows, so that the adjacent battery group 2 is adhered and fixed to the previous first beam 1 or the front box frame 3. In this way, a simple operation is provided, the feasibility is high, and the adhering and fixing effect of the battery groups 2 and the first beams 1 or the box frame 3 may be improved.

In some embodiments, in the assembling method of the battery device provided by the disclosure, the step 101 may further include the following step. As shown in FIG. 1, the structural adhesives are arranged on the two opposite second side surfaces 22 of the battery group 2 or on the second beam 4 adjacent to the second side surfaces 22.

In this embodiment, the structural adhesives are provided on both the orientations of the two first side surfaces 21 and the two second side surfaces 22 of the battery group 2. That is, the four side surfaces of the battery group 2 and the corresponding beams are all fixed by the adhesive layers. In this way, the pressure of the battery group 2 on the bottom plate 6 may be further reduced, and the overall reliability and safety of the battery device may be further improved.

In some embodiments, as shown in FIG. 5, the box frame 3 includes the bottom plate 6, and the assembling method of the battery device provided by this embodiment further includes the following step.

In the step, the bottom plate 6 and the first beams 1 are locked and fixed by the bolts 7 and the like from a bottom portion of the battery device.

The first beams 1 and the bottom plate 6 are detachably connected by connectors such as the bolts 7, and in this way, fixing yield of the first beams 1 is further increased, the first beams 1 may be conveniently assembled and disassembled, and the reliability of the assembly of the first beams 1 is ensured. Further, by arranging the installation holes on the first beams 1 and the second bottom plate 6, the assembly of the first beams 1 may be positioned, and the accuracy of the assembly positions of the first beams 1 may be improved. An excessively large or excessively small pressure applied on the battery groups 2, due to the improper assembly of the first beams 1 and thereby affecting the assembly yield of the battery device, is thereby prevented from being generated.

In some embodiments, the battery groups 2 and the first beams 1 are installed in the box frame 3 in sequence in the first direction x, and this step specifically includes the following.

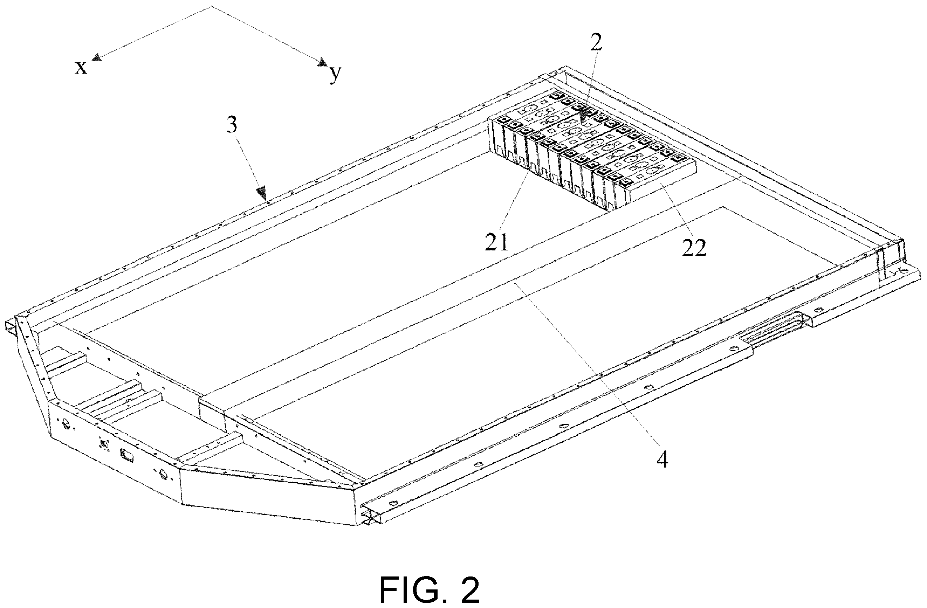

As shown in FIG. 1 and FIG. 2, the structural adhesive is arranged on the first-installed battery group and/or the frame of the box frame adjacent to the first-installed battery group, and the first-installed battery group is placed into the box frame adjacent to the frame of the box frame 3. In other words, the position adjacent to the frame of the box frame is the starting position, and the battery group 2 that is installed first is placed adjacent to the frame of the box and is adhered to the frame of the box.

In some embodiments, after the step 102 is performed, the following step may further be included.

In the step, an electrical device is arranged at the first set interval s. In this way, the space in the box frame 3 may be fully utilized, and the energy density of the battery device may be improved.

For instance, the side of the last-installed first beam 1 facing away from the battery group 2 directly faces the frame of the box and is separated from the frame by the first set interval s. The region where the first set interval s is located is configured as the power distribution region. The power distribution region may be configured for arrangement of the electrical device after the first beams 1 are installed, and in this way, the space is reused and is effectively saved, and the energy density of the battery device is thereby improved.

In some embodiments, as shown in FIG. 5 and FIG. 6, the first set interval s is greater than 5 mm. Preferably, the first set interval s is greater than 8 mm, for example, the first set interval s may be 8 mm, 10 mm, 12 mm, 14 mm, 16 mm, 18 mm, and 20 mm. Preferably, the first set interval s is between 8 mm and 15 mm. Through the arrangement of the first set interval s, a space that is sufficient for installation of the last first beam 1 is kept. As such, the adhesive layer is prevented from being scratched off when this first beam 1 is installed, so the assembly yield is ensured, the moving stroke of this first beam 1 in the first direction x is short, and installation may thus be conveniently performed. Besides, the first set interval s does not occupy much space of the battery device, so that the energy density of the battery device is ensured.

In some embodiments, as shown in FIG. 3, the second set interval d is greater than 5 mm. In the step 102, arranging the first beam 1 to be separated from the adjacent battery group 2 by the second set interval d in the first direction x further includes the following step. To be specific, the first beam 1 is arranged at a distance of greater than 5 mm from the battery group 2, preferably at a distance of 8 mm to 15 mm, for example, the distance may specifically be 8 mm, 10 mm, 12 mm, 14 mm, and 15 mm.

Through the arrangement of the second set interval d, the adhesive layer between the first beam 1 and the battery group 2 is prevented from being scratched off. As such, the assembly yield is ensured, the moving stroke of the first beam 1 in the first direction x is shorter, and installation may be conveniently performed.

To be specific, as shown in FIG. 3 and FIG. 5, the specific values of the second set interval d between the different first beams 1 and the adjacent battery groups 2 may be different during the installation process. For instance, regarding the last-installed first beam 1, the second set interval d between this first beam 1 and its adjacent battery group 2 during the installation process is required to be less than or equal to the first set interval s. Regarding the rest of the first beams 1, the second set interval d between each of these first beams 1 and its adjacent battery group 2 during the installation process may be greater than the first set interval s.

In the assembling method of the battery device provided by this embodiment, the battery groups and the first beams are assembled in an alternating manner. Further, the first beams are adhered and fixed to the battery groups by moving the first beams horizontally until the battery groups are pressed. In this way, the adhesive fixing strength between the first beams and the battery groups may be enhanced, and adhesive scratching caused by direct installation of the battery groups in the chamber of the box is also prevented from occurring. As such, the assembly yield of the battery device is increased, the feasibility of the process is improved through the assembling method, and the production efficiency is raised.

To be specific, the assembling method of the battery device provided by the disclosure have the same inventive concept as the battery device provided by the disclosure and have the same embodiments and beneficial effects, and description thereof is not repeated herein in the disclosure.

To be specific, the battery device provided by this embodiment may be a battery pack. The bottom plate of the battery device may include a liquid cooling plate. The battery groups and the beams are fixed by adhesives, and in this way, the pressure of the battery groups on the liquid cooling plate may be reduced, and the safety and reliability of the battery pack is improved.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery device, comprising a box frame (3), and battery groups (2) and first beams (1) located in the box frame (3), wherein an adhesive layer is provided between each of the first beams (1) and a first side surface (21) of an adjacent one of the battery groups (2), the adhesive layer is formed as each of the first beams (1) and the first side surface (21) of the adjacent one of the battery groups (2) are mutually pressed in a first direction (x **characterized in that** , a side of one of the first beams (1) located at an end portion facing away from the battery groups (2) is adjacent to the box frame (3) and is separated from the box frame (3) by a first set interval (s), and the first set interval (s) is configured to allow the first beam (1) at the end portion to move towards the first side surface (21) of the battery group (2) for adhering.

2. The battery device according to claim 1, wherein the battery groups (2) and the first beams (1) are arranged in an alternating manner in sequence in the first direction (x).

3. The battery device according to claim 1, wherein the first set interval (s) is greater than 5 mm.

4. The battery device according to claim 1, wherein each of the battery groups (2) comprises at least one column of batteries, an arrangement direction of the at least one column of batteries is perpendicular to larger surfaces of the batteries, and the first beams (1) are parallel to the arrangement direction of the at least one column of batteries.

5. The battery device according to claim 1, wherein the box frame (3) comprises a second beam (4), the second beam (4) intersects an extending direction of the first beams (1), and the first beams (1) and the second beams (4) are detachably connected.

6. The battery device according to claim 5, wherein both ends of each of the first beams respectively couple two second beams (4), and are respectively secured to the two second beams (4) by fasteners (7).

7. The battery device according to claim 5, wherein each of the first beams (1) is provided with a first positioning portion, the second beam (4) is provided with a second positioning portion, and the first positioning portion and the second positioning portion are matched, such that the first beams (1) and the second beam (4) are positioned and assembled.

8. The battery device according to claim 7, wherein the first positioning portion and the second positioning portion are positioning holes, and the first positioning portion and the second positioning portion are connected by a fastener (7).

9. The battery device according to claim 5, wherein an adhesive layer is provided between the second beam (4) and a second side surface (22) of the adjacent one of the battery groups (2).

10. The battery device according to claim 1, wherein the box frame (3) further comprises a bottom plate (6), and the first beams (1) and the bottom plate (6) are connected by fasteners.

11. The battery device according to any one of claims 1-10, wherein the battery device has a battery group region and a power distribution region, the box frame (3) comprises a divider beam (5) separating the battery group region from the power distribution region, and the side of the first beam (1) located at the end portion facing away from the battery group (2) is adjacent to the divider beam (5) and is separated from the divider beam (5) by the first set interval (s).

12. The battery device according to any one of claims 1-10, wherein the battery device has a battery group region and a power distribution region, the first beam (1) at the end portion separates the battery group region from the power distribution region, and the side of the first beam (1) located at the end portion facing away from the battery group (2) is adjacent to a frame of the box frame (3) and is separated from the frame by the first set interval (s).

13. An assembling method of a battery device, comprising the following steps:
arranging a structural adhesive on a first side surface (21) of each battery group (2) and/or on a first beams (1) adjacent to the first side surface (21); and
installing the battery groups (2) and the first beams (1) in a box frame (3) in sequence in a first direction (x), and **characterized by**
allowing a side of one of the first beams (1) located at an end portion facing away from the battery groups (2) to face the box frame (3) and to be separated from the box frame (3) by a first set interval (s), wherein an installation process of each first beam (1) includes:
arranging the first beam (1) to be separated from the adjacent battery group (2) by a second set interval (d) in the first direction (x), and then pressing the first beam (1) towards the adjacent battery group (2) until the structural adhesive between the first side surface (21) of the battery group (2) and the first beam (1) is squeezed apart, such that the battery group (2) is firmly adhered to the first beam (1) by the structural adhesive.

14. The assembling method of the battery device according to claim 13, wherein the step of installing the battery groups (2) and the first beams (1) in the box frame (3) in sequence in the first direction (x) further comprises: installing the battery groups (2) and the first beams (1) in the box frame (3) in an alternating manner in sequence in the first direction (x).

15. The assembling method of the battery device according to claim 13, wherein the first set interval (s) is greater than 5 mm.

16. The assembling method of the battery device according to claim 13, wherein each of the battery groups (2) comprises at least one column of batteries, an arrangement direction of the at least one column of batteries is perpendicular to larger surfaces of the batteries, and an installation process of each battery group (2) comprises:
over-pressing and loading the battery group (2) in the arrangement direction of the at least one column of batteries into the box frame (3), wherein the first side surface (21) of the battery group (2) is parallel to the arrangement direction of the at least one column of batteries.

17. The assembling method of the battery device according to claim 13, wherein the box frame (3) comprises second beams (4), the second beams (4) intersect an extending direction of the first beams (1), and the assembling method of the battery device further comprises:
securing the first beams (1) and the second beam (4) by fasteners (7).

18. The assembling method of the battery device according to claim 17, further comprising:
arranging structural adhesives on two opposite second side surfaces (22) of each battery group (2) or on the second beams (4) adjacent to the second side surfaces (22).

19. The assembling method of the battery device according to claim 13, wherein the box frame (3) comprises a bottom plate (6), and the assembling method of the battery device further comprises:
securing the bottom plate (6) and the first beams (1) by fasteners from a bottom portion of the battery device.

20. The assembling method of the battery device according to claim 13, wherein the step of arranging the first beam (1) to be separated from the adjacent battery group (2) by the second set interval (d) in the first direction (x) further comprises:
arranging the first beam (1) to be separated from the adjacent battery group (2) by 8 mm to 15 mm.

21. The assembling method of the battery device according to claim 13, wherein the step of installing the battery groups (2) and the first beams (1) in the box frame (3) in sequence in the first direction (x) further comprises:
arranging the structural adhesive on the first-installed battery group (2) and/or a frame of the box frame (3) adjacent to the first-installed battery group (2) and placing the first-installed battery group (2) into the box frame (3) and adjacent to the frame of the box frame (3).

22. The assembling method of the battery device according to claim 13, wherein the step of pressing the first beam (1) towards the adjacent battery group (2) until the structural adhesive between the first side surface (21) of the battery group (2) and the first beam (1) is squeezed apart, such that the battery group (2) is firmly adhered to the first beam (1) by the structural adhesive further comprises:
pressing the first beam (1) towards the adjacent battery group (2) until the structural adhesives on two sides of the battery group (2) are squeezed apart, such that the battery group (2) is firmly adhered to the structures at the two sides of the battery group (2) by the structural adhesives.

23. The assembling method of the battery device according to any one of claims 13-22, wherein after the step of installing the battery groups (2) and the first beams (1) in the box frame (3) in sequence in the first direction (x), further comprises:
arranging an electrical device at the first set interval (s).

## Patentansprüche

1. Batterievorrichtung, umfassend einen Kastenrahmen (3) und Batteriegruppen (2) und erste Balken (1), die sich in dem Kastenrahmen (3) befinden, wobei eine Klebeschicht zwischen jedem der ersten Balken (1) und einer ersten Seitenfläche (21) einer Angrenzenden der Batteriegruppen (2) bereitgestellt ist, wobei die Klebeschicht gebildet wird, wenn jeder der ersten Balken (1) und die erste Seitenfläche (21) der Angrenzenden der Batteriegruppen (2) in einer ersten Richtung (x) gegeneinander gedrückt werden, **dadurch gekennzeichnet, dass**
eine Seite eines der ersten Balken (1),
die sich an einem Endabschnitt befindet, der von den Batteriegruppen (2) abgewandt ist, an den Kastenrahmen (3) angrenzt und von dem Kastenrahmen (3) durch einen ersten eingestellten Abstand (s) getrennt ist, und der erste eingestellte Abstand (s) konfiguriert ist, um es dem ersten Balken (1) an dem Endabschnitt zu ermöglichen, sich in Richtung der ersten Seitenfläche (21) der Batteriegruppe (2) zu bewegen, um zu kleben.

2. Batterievorrichtung gemäß Anspruch 1, wobei die Batteriegruppen (2) und die ersten Balken (1) in der ersten Richtung (x) in abwechselnder Weise nacheinander angeordnet sind.

3. Batterievorrichtung gemäß Anspruch 1, wobei der erste eingestellte Abstand (s) größer als 5 mm ist.

4. Batterievorrichtung gemäß Anspruch 1, wobei jede der Batteriegruppen (2) mindestens eine Säule von Batterien umfasst, eine Anordnungsrichtung der mindestens einen Säule von Batterien senkrecht zu größeren Oberflächen der Batterien ist, und die ersten Balken (1) parallel zu der Anordnungsrichtung der mindestens einen Säule von Batterien sind.

5. Batterievorrichtung gemäß Anspruch 1, wobei der Kastenrahmen (3) einen zweiten Balken (4) umfasst, der zweite Balken (4) eine Erstreckungsrichtung der ersten Balken (1) schneidet und die ersten Balken (1) und die zweiten Balken (4) lösbar verbunden sind.

6. Batterievorrichtung gemäß Anspruch 5, wobei beide Enden jedes der ersten Balken jeweils zwei zweite Balken (4) koppeln und jeweils an den beiden zweiten Balken (4) durch Befestigungsmittel (7) befestigt sind.

7. Batterievorrichtung gemäß Anspruch 5, wobei jeder der ersten Balken (1) mit einem ersten Positionierungsabschnitt bereitgestellt ist, der zweite Balken (4) mit einem zweiten Positionierungsabschnitt bereitgestellt ist und der erste Positionierungsabschnitt und der zweite Positionierungsabschnitt aufeinander abgestimmt sind, so dass die ersten Balken (1) und der zweite Balken (4) positioniert und zusammengefügt sind.

8. Batterievorrichtung gemäß Anspruch 7, wobei der erste Positionierungsabschnitt und der zweite Positionierungsabschnitt Positionierungslöcher sind und der erste Positionierungsabschnitt und der zweite Positionierungsabschnitt durch ein Befestigungsmittel (7) verbunden sind.

9. Batterievorrichtung gemäß Anspruch 5, wobei eine Klebeschicht zwischen dem zweiten Balken (4) und einer zweiten Seitenfläche (22) der Angrenzenden der Batteriegruppen (2) bereitgestellt ist.

10. Batterievorrichtung gemäß Anspruch 1, wobei der Kastenrahmen (3) ferner eine Bodenplatte (6) umfasst und die ersten Balken (1) und die Bodenplatte (6) durch Befestigungsmittel verbunden sind.

11. Batterievorrichtung gemäß einem der Ansprüche 1 bis 10, wobei die Batterievorrichtung einen Batteriegruppenbereich und einen Stromverteilungsbereich aufweist, der Kastenrahmen (3) einen Trennbalken (5) umfasst, der den Batteriegruppenbereich von dem Stromverteilungsbereich trennt, und die Seite des ersten Balkens (1), die sich an dem Endabschnitt befindet, der von der Batteriegruppe (2) abgewandt ist, an den Trennbalken (5) angrenzt und von dem Trennbalken (5) durch den ersten eingestellten Abstand (s) getrennt ist.

12. Batterievorrichtung gemäß einem der Ansprüche 1 bis 10, wobei die Batterievorrichtung einen Batteriegruppenbereich und einen Stromverteilungsbereich aufweist, der erste Balken (1) an dem Endabschnitt den Batteriegruppenbereich von dem Stromverteilungsbereich trennt und die Seite des ersten Balkens (1), die sich an dem Endabschnitt befindet, abgewandt von der Batteriegruppe (2), an einen Rahmen des Kastenrahmens (3) angrenzt und von dem Rahmen durch den ersten eingestellten Abstand (s) getrennt ist.

13. Zusammenbauverfahren einer Batterievorrichtung, umfassend die folgenden Schritte:
Anordnen eines Strukturklebstoffs auf einer ersten Seitenfläche (21) jeder Batteriegruppe (2) und/oder auf einem ersten Balken (1), angrenzend an die erste Seitenfläche (21); und
Installieren der Batteriegruppen (2) und der ersten Balken (1) in einem Kastenrahmen (3) nacheinander in einer ersten Richtung (x), und **gekennzeichnet durch**
Zulassen, dass eine Seite eines der ersten Balken (1), die sich an einem Endabschnitt befindet, der von den Batteriegruppen (2) abgewandt ist, dem Kastenrahmen (3) zugewandt ist und von dem Kastenrahmen (3) durch einen ersten eingestellten Abstand (s) getrennt ist, wobei ein Installationsprozess jedes ersten Balkens (1) enthält:
Anordnen des ersten Balkens (1), um von der angrenzenden Batteriegruppe (2) durch einen zweiten eingestellten Abstand (d) in der ersten Richtung (x) getrennt zu sein, und dann Drücken des ersten Balkens (1) in Richtung der angrenzenden Batteriegruppe (2), bis der Strukturklebstoff zwischen der ersten Seitenfläche (21) der Batteriegruppe (2) und dem ersten Balken (1) auseinandergedrückt wird, so dass die Batteriegruppe (2) durch den Strukturklebstoff fest an den ersten Balken (1) geklebt wird.

14. Zusammenbauverfahren der Batterievorrichtung gemäß Anspruch 13, wobei der Schritt des Installierens der Batteriegruppen (2) und der ersten Balken (1) in den Kastenrahmen (3) nacheinander in der ersten Richtung (x) ferner umfasst:
Installieren der Batteriegruppen (2) und der ersten Balken (1) in den Kastenrahmen (3) in abwechselnder Weise nacheinander in der ersten Richtung (x).

15. Zusammenbauverfahren der Batterievorrichtung gemäß Anspruch 13, wobei der erste eingestellte Abstand (s) größer als 5 mm ist.

16. Zusammenbauverfahren der Batterievorrichtung gemäß Anspruch 13, wobei jede der Batteriegruppen (2) mindestens eine Säule von Batterien umfasst, eine Anordnungsrichtung der mindestens einen Säule von Batterien senkrecht zu größeren Oberflächen der Batterien ist, und ein Installationsprozess jeder Batteriegruppe (2) umfasst:
Überdrücken und Laden der Batteriegruppe (2) in der Anordnungsrichtung der mindestens einen Batteriesäule in den Kastenrahmen (3), wobei die erste Seitenfläche (21) der Batteriegruppe (2) parallel zu der Anordnungsrichtung der mindestens einen Batteriesäule ist.

17. Zusammenbauverfahren der Batterievorrichtung gemäß Anspruch 13, wobei der Kastenrahmen (3) zweite Balken (4) umfasst, die zweiten Balken (4) eine Erstreckungsrichtung der ersten Balken (1) schneiden und das Zusammenbauverfahren der Batterievorrichtung ferner umfasst:
Befestigen der ersten Balken (1) und des zweiten Balkens (4) durch Befestigungsmittel (7).

18. Zusammenbauverfahren der Batterievorrichtung gemäß Anspruch 17, das ferner umfasst:
Anordnen von Strukturklebstoffen auf zwei gegenüberliegenden zweiten Seitenflächen (22) jeder Batteriegruppe (2) oder auf den zweiten Balken (4) neben den zweiten Seitenflächen (22).

19. Zusammenbauverfahren der Batterievorrichtung gemäß Anspruch 13, wobei der Kastenrahmen (3) eine Bodenplatte (6) umfasst, und das Zusammenbauverfahren der Batterievorrichtung ferner umfasst:
Befestigen der Bodenplatte (6) und der ersten Balken (1) durch Befestigungsmittel von einem unteren Abschnitt der Batterievorrichtung.

20. Zusammenbauverfahren der Batterievorrichtung gemäß Anspruch 13, wobei der Schritt des Anordnens des ersten Balkens (1), um von der angrenzenden Batteriegruppe (2) durch den zweiten eingestellten Abstand (d) in der ersten Richtung (x) getrennt zu sein, ferner umfasst:
Anordnen des ersten Balkens (1), um von der angrenzenden Batteriegruppe (2) um 8 mm bis 15 mm getrennt zu sein.

21. Zusammenbauverfahren der Batterievorrichtung gemäß Anspruch 13, wobei der Schritt des Installierens der Batteriegruppen (2) und der ersten Balken (1) in den Kastenrahmen (3) in der ersten Richtung (x) nacheinander umfasst:
Anordnen des Strukturklebstoffs auf der zuerst eingebauten Batteriegruppe (2) und/oder einen Rahmen des Kastenrahmens (3), der an die zuerst eingebaute Batteriegruppe (2) angrenzt, und Anbringen der zuerst eingebauten Batteriegruppe (2) in den Kastenrahmen (3) und angrenzend an den Rahmen des Kastenrahmens (3).

22. Zusammenbauverfahren der Batterievorrichtung gemäß Anspruch 13, wobei der Schritt des Drückens des ersten Balkens (1) in Richtung der angrenzenden Batteriegruppe (2), bis der Strukturklebstoff zwischen der ersten Seitenfläche (21) der Batteriegruppe (2) und dem ersten Balken (1) auseinandergedrückt wird, so dass die Batteriegruppe (2) durch den Strukturklebstoff fest an den ersten Balken (1) geklebt wird, ferner umfasst:
Drücken des ersten Balkens (1) in Richtung der angrenzenden Batteriegruppe (2), bis die Strukturklebstoffe auf zwei Seiten der Batteriegruppe (2) auseinandergedrückt werden, so dass die Batteriegruppe (2) durch die Strukturklebstoffe fest mit den Strukturen an den beiden Seiten der Batteriegruppe (2) geklebt wird.

23. Zusammenbauverfahren der Batterievorrichtung gemäß einem der Ansprüche 13-22, wobei nach dem Schritt des Installierens der Batteriegruppen (2) und der ersten Balken (1) in dem Kastenrahmen (3) in der ersten Richtung (x) nacheinander ferner umfasst:
Anordnen einer elektrischen Vorrichtung in dem ersten eingestellten Abstand (s).

## Revendications

1. Dispositif de batterie, comprenant un cadre de boîte (3), et des groupes de batteries (2) et des premiers faisceaux (1) situés dans le cadre de boîte (3), dans lequel une couche adhésive est prévue entre chacun des premiers faisceaux (1) et une première surface latérale (21) d'un groupe adjacent parmi les groupes de batteries (2), la couche adhésive est formée lorsque chacun des premiers faisceaux (1) et la première surface latérale (21) de l'un des groupes adjacents parmi les groupes de batteries (2) sont mutuellement pressées dans une première direction (x), **caractérisé par le fait qu'**un côté de l'un des premiers faisceaux (1) situé dans une partie d'extrémité opposée aux groupes de batteries (2) est adjacent au cadre de la boîte (3) et est séparé du cadre de la boîte (3) au moyen d'un premier intervalle défini (s), et le premier intervalle défini (s) est configuré pour permettre au premier faisceau (1) dans la partie d'extrémité de se déplacer vers la première surface latérale (21) du groupe de batteries (2) pour y adhérer.

2. Dispositif de batterie selon la revendication 1, dans lequel les groupes de batteries (2) et les premiers faisceaux (1) sont disposés d'une manière alternée en séquence dans la première direction (x).

3. Dispositif de batterie selon la revendication 1, dans lequel le premier intervalle défini (s) est supérieur à 5 mm.

4. Dispositif de batterie selon la revendication 1, dans lequel chacun des groupes de batteries (2) comprend au moins une colonne de batteries, une direction de disposition de l'au moins une colonne de batteries est perpendiculaire aux plus grandes surfaces des batteries, et les premiers faisceaux (1) sont parallèles à la direction de disposition de l'au moins une colonne de batteries.

5. Dispositif de batterie selon la revendication 1, dans lequel le cadre de boîte (3) comprend un deuxième faisceau (4), le deuxième faisceau (4) coupe une direction d'extension des premiers faisceaux (1), et les premiers faisceaux (1) et les deuxièmes faisceaux (4) sont reliés de manière amovible.

6. Dispositif de batterie selon la revendication 5, dans lequel les deux extrémités de chacun des premiers faisceaux relient respectivement deux deuxièmes faisceaux (4), et sont respectivement fixés aux deux deuxièmes faisceaux (4) au moyen d'éléments de fixation (7) .

7. Dispositif de batterie selon la revendication 5, dans lequel chacun des premiers faisceaux (1) est pourvu d'une première portion de positionnement, le deuxième faisceau (4) est pourvu d'une deuxième portion de positionnement, et la première portion de positionnement et la deuxième portion de positionnement sont appariées, de telle sorte que les premiers faisceaux (1) et le deuxième faisceau (4) soient positionnés et assemblés.

8. Dispositif de batterie selon la revendication 7, dans lequel la première partie de positionnement et la deuxième partie de positionnement sont des trous de positionnement, et la première partie de positionnement et la deuxième partie de positionnement sont reliées au moyen d'un élément de fixation (7).

9. Dispositif de batterie selon la revendication 5, dans lequel une couche adhésive est prévue entre le deuxième faisceau (4) et une deuxième surface latérale (22) du groupe adjacent parmi les groupes de batteries (2).

10. Dispositif de batterie selon la revendication 1, dans lequel le cadre de boîte (3) comprend en outre une plaque de fond (6), et les premiers faisceaux (1) et la plaque de fond (6) sont reliés au moyen d'éléments de fixation.

11. Dispositif de batterie selon l'une quelconque des revendications 1 à 10, dans lequel le dispositif de batterie comporte une région de groupe de batteries et une région de distribution d'énergie, le cadre de boîte (3) comprend un faisceau de séparation (5) séparant la région de groupe de batteries de la région de distribution d'énergie, et le côté du premier faisceau (1) situé au niveau de la partie d'extrémité faisant face à l'opposé du groupe de batteries (2) est adjacent au faisceau de séparation (5) et est séparé du faisceau de séparation (5) au moyen du premier intervalle défini (s) .

12. Dispositif de batterie selon l'une quelconque des revendications 1 à 10, dans lequel le dispositif de batterie comporte une région de groupe de de batteries et une région de distribution de puissance, le premier faisceau (1) situé au niveau de la portion d'extrémité sépare la région de groupe de batteries de la région de distribution de puissance, et le côté du premier faisceau (1) situé au niveau de la portion d'extrémité et faisant face à l'opposé du groupe de batteries (2) est adjacent à un cadre du cadre de boîte (3) et est séparé du cadre au moyen du premier intervalle défini (s) .

13. Procédé d'assemblage d'un dispositif de batterie, comprenant les étapes suivantes :
la disposition d'un adhésif structurel sur une première surface latérale (21) de chaque groupe de batteries (2) et/ou sur un premier faisceau (1) adjacent à la première surface latérale (21) ; et
l'installation des groupes de batteries (2) et des premiers faisceaux (1) dans un cadre de boîte (3) en séquence dans une première direction (x), et **caractérisé par** le fait de permettre à un côté de l'une des premiers faisceaux (1) situé au niveau d'une partie d'extrémité faisant face à l'opposé des groupes de batteries (2) de faire face au cadre de boîte (3) et d'être séparé du cadre de boîte (3) au moyen d'un premier intervalle défini (s), dans lequel un procédé d'installation de chaque premier faisceau (1) comprend :
la disposition du premier faisceau (1) devant être séparé du groupe de batteries adjacent (2) au moyen d'un deuxième intervalle défini (d) dans la première direction (x), puis le pressage du premier faisceau (1) en direction du groupe de batteries adjacent (2) jusqu'à ce que l'adhésif structurel entre la première surface latérale (21) du groupe de batteries (2) et le premier faisceau (1) soit écrasé, de telle sorte que le groupe de batteries (2) est fermement collé au premier faisceau (1) au moyen de l'adhésif structurel.

14. Procédé d'assemblage du dispositif de batterie selon la revendication 13, dans lequel l'étape d'installation des groupes de batteries (2) et des premiers faisceaux (1) dans le cadre de boîte (3) en séquence dans la première direction (x) comprend en outre :
l'installation des groupes de batteries (2) et des premiers faisceaux (1) dans le cadre de boîte (3) d'une manière alternée en séquence dans la première direction (x) .

15. Procédé d'assemblage du dispositif de batterie selon la revendication 13, dans lequel le premier intervalle défini (s) est supérieur à 5 mm.

16. Procédé d'assemblage du dispositif de batterie selon la revendication 13, dans lequel chacun des groupes de batteries (2) comprend au moins une colonne de batteries, une direction de disposition d'au moins une colonne de batteries est perpendiculaire aux plus grandes batteries, et un procédé d'installation de chaque groupe de batteries (2) comprend :
la sur-presse et la charge du groupe de batteries (2) dans la direction de disposition d'au moins une colonne de batteries dans le cadre de boîte (3), dans lequel la première surface latérale (21) du groupe de batteries (2) est parallèle à la direction de disposition d'au moins une colonne de batteries.

17. Procédé d'assemblage du dispositif de batterie selon la revendication 13, dans lequel le cadre de boîte (3) comprend les deuxièmes faisceaux (4), les deuxièmes faisceaux (4) croisent une direction d'extension des premiers faisceaux (1), et le procédé d'assemblage du dispositif de batterie comprend en outre :
la fixation des premiers faisceaux (1) et du deuxième faisceau (4) au moyen d'éléments de fixation (7).

18. Procédé d'assemblage du dispositif de batterie selon la revendication 17, comprenant en outre :
la disposition des adhésifs structurels sur deux deuxièmes surfaces latérales opposées (22) de chaque groupe de batteries (2) ou sur les deuxièmes faisceaux (4) adjacents aux deuxièmes surfaces latérales (22).

19. Procédé d'assemblage du dispositif de batterie selon la revendication 13, dans lequel le cadre de boîte (3) comprend une plaque inférieure (6), et le procédé d'assemblage du dispositif de batterie comprend en outre :
la fixation de la plaque inférieure (6) et des premiers faisceaux (1) au moyen d'éléments de fixation à partir d'une partie inférieure du dispositif de batterie.

20. Procédé d'assemblage du dispositif de batterie selon la revendication 13, dans lequel l'étape consistant à disposer le premier faisceau (1) devant être séparé du groupe de batteries adjacent (2) au moyen du deuxième intervalle défini (d) dans la première direction (x) comprend en outre :
la disposition du premier faisceau (1) devant être séparé du groupe de batteries adjacent (2) de 8 mm à 15 mm.

21. Procédé d'assemblage du dispositif de batterie selon la revendication 13, dans lequel l'étape d'installation des groupes de batteries (2) et des premiers faisceaux (1) dans le cadre de boîte (3) en séquence dans la première direction (x) comprend en outre :
la disposition de l'adhésif structurel sur le groupe de batteries premièrement installé (2) et/ou un cadre du cadre de boîte (3) adjacent au groupe de batteries premièrement installé (2) et le placement du groupe de batteries premièrement installé (2) dans le cadre de boîte (3) et adjacent au cadre du cadre de boîte (3)

22. Procédé d'assemblage du dispositif de batterie selon la revendication 13, dans lequel l'étape de pression du premier faisceau (1) en direction du groupe de batteries adjacent (2) jusqu'à l'adhésif structurel entre la première surface latérale (21) du groupe de batteries (2) et le premier faisceau (1) est séparé par compression, de telle sorte que le groupe de batteries (2) adhère fermement au premier faisceau (1) au moyen de l'adhésif structurel comprend en outre :
le pressage sur le premier faisceau (1) en direction du groupe de batteries adjacent (2) jusqu'à ce que les adhésifs structurels sur deux côtés du groupe de batteries (2) soient séparés par compression, de telle sorte que le groupe de batteries (2) soit fermement collé aux structures au niveau des deux côtés du groupe de batteries (2) au moyen des adhésifs structurels.

23. Procédé d'assemblage du dispositif de batterie selon l'une quelconque des revendications 13 à 22, dans lequel après l'étape d'installation des groupes de batteries (2) et des premiers faisceaux (1) dans le cadre de boîte (3) en séquence dans la première direction (x), comprend en outre :
la disposition d'un dispositif électrique au niveau du premier intervalle défini (s).
